# EUROPEAN PATENT SPECIFICATION

(11) **EP 3 530 412 B1**
(45) Date of publication and mention of the grant of the patent: **11.09.2024**
(21) Application number: 19167087.6
(22) Date of filing: 24.01.2018
(51) Int. Cl.: B25J 5/02, B64F 5/10

(54) **BELT DRIVE DUAL ROBOT GANTRY**
DOPPELROBOTERPORTAL MIT RIEMENANTRIEB
PORTIQUE À DOUBLE ROBOT POUR TRANSMISSION DE COURROIE

(30) Priority: 27.01.2017 US 201715418379; 06.03.2017 NL 2018471
(43) Date of publication of application: 28.08.2019
(62) Divisional of application: 18153300.1
(73) Proprietor: The Boeing Company, Arlington, VA 22202 (US)
(72) Inventor: MILLER, John Eric, Chicago, IL 60606-1596 (US); MATHIS, Dennis R., Chicago, IL 60606-1596 (US)
(74) Representative: Duxbury, Stephen

(56) References cited:
- DE-U1- 202015 101 427
- DE-U1- 202015 101 427
- US-A- 5 018 923
- US-A1- 2012 053 726
- US-A1- 2015 343 473
- US-A1- 2016 011 593

## Description

### BACKGROUND INFORMATION

### 1. Field.

The disclosure is related generally to robotics and more specifically to an isolated human work platform for stabilized positioning of collaborative robotics.

### 2. Background.

Aircraft manufacturers typically rely on work cell automation during the build process for a fuselage assembly. A typical work cell includes a workstand and one or more cradle fixtures to hold and position the fuselage assembly.

Currently, robots are used outside the fuselage assembly, and some work inside the fuselage assembly is performed by robots as well. However, it is desired to increase the use of robots inside the fuselage assembly, as well provide humans with safe access while the robots operate within the fuselage assembly.

However, platforms used inside the fuselage assembly are not isolated and, as a result, end-of-arm tooling on robots inside the fuselage assembly may bounce or otherwise be impacted due to platform movement caused by human or machine motion nearby, which results in the end-of-arm tooling on the robots being in the wrong location or position.

There is a need, then for a work platform that allows humans to work safely inside the fuselage assembly, and that provides isolated support for human and machine motion without imparting any of that motion to the robots working inside the fuselage assembly.

The German Gebrauchsmusterschrift DE 20 2015 101 427 U1 states "an apparatus for arranging windows into vehicle chassis, whereby a work platform for a human operator and a base platform for supporting a robot are external to the chassis".

### SUMMARY

To overcome the limitations in the prior art described above, and to overcome other limitations that will become apparent upon reading and understanding the present specification, the present disclosure describes a method, according to claims 12-15, and an apparatus according to claimsl-11, for positioning robots using a gantry.

A base platform is provided, and a work platform is positioned above the base platform for supporting one or more humans. One or more robots are supported on the base platform independently of the work platform. At least one gantry is positioned above the base platform and adjacent the work platform for supporting and positioning the robots along the work platform.

Each of the one or more robots is placed upon an individual support stand that is attached to the gantry.

The individual support stand includes a base that extends underneath the gantry to counter-balance the individual support stand and the robot placed thereon.

Preferably the base platform and work platform are positioned within a fuselage assembly of an aircraft.

The disclosure also relates to an apparatus for supporting collaborative robots and humans
in a work envelope, comprising:
a base platform;
a work platform with one or more sides positioned above the base platform for supporting one or more humans, a gantry positioned above the base platform and underneath the work platform and
one or more robots, preferably slideably supported by each gantry. The gantry can be isolatedly coupled to the base platform.

The robots can be supported independently of the work platform on gantries positioned on both sides of the work platform.

The gantries can be mounted on and supported by the base platform independently of the work platform.

The gantries positioned above the base platform and underneath the work platform, are preferably used for positioning the robots along a length of the work platform.

The robots can be placed on individual support stands are mounted on the gantries.

There are preferably separate gantries on each side of the work platform.

Each of the robots can be placed upon an individual support stand attached to a gantry. The robots and the individual support stands can be fully supported by the gantries which in turn can be supported by the base platform and are not affected by motion of the work platform.

In designing the gantries the need was identified by the inventors to position a robot using only a single gantry and to preferably independently position two robots on each side of the work platform using only the single gantry.

The single gantry allows for independent control to drive two robots on one side of the work platform to their respective specified locations using high precision.

As noted above, there may be one gantry positioned adjacent to each inside edge of the work platform for moving the robot(s) along a length of the work platform.

The gantry is preferably constructed of a steel main square support tube that can be anchored near a riser at one end, i.e., a forward end of the base platform so that the weight of the gantry can be supported from the forward end of the base platform. A remainder of the steel main square support tube can be cantilevered and positioned above the base platform towards another end, i.e., an aft end of the base platform, so that the gantry can be isolated from motion of the work platform.

The steel main square support tube can then be coupled to the end-of-platform support at the aft end of the base platform.

Another gantry can be present on the other side of the work platform in a mirror image of the first gantry.

The main square support tube can be comprised of two guide rails comprising an upper guide rail and a lower guide rail. Each of the individual support stands may include a bracket that mounts the base to the guide rails of the gantry to provide for movement and support of the individual support stand, and the robot thereon.

The disclosure also relates to method of supporting collaborative robots and humans in a work envelope, comprising:
providing a base platform;
positioning a work platform above the base platform for supporting one or more humans, moving a robot relative to a work platform side along a gantry; and
positioning the gantry above the base platform and underneath the work platform.

The robot can be moved, preferably on a support, relative to a work platform side along a gantry.

The gantry can be isolatedly coupled to the base platform.

As also referred to above:
The robot or robots can be supported independently of the work platform on gantries positioned on both sides of the work platform.

The gantries may be mounted on and supported by the base platform independently of the work platform. The gantries positioned above the base platform and underneath the work platform are preferably used for positioning the one or more robots along a length of the work platform.

The one or more robots can be placed on individual support stands which are preferably mounted on the gantries.

There can be separate gantries on each side of the work platform. Each of the robots can be placed upon an individual support stand attached to their respective gantries. The robots and the individual support stands can be fully supported by the gantries which in turn may be supported by the base platform and are not affected by motion of the work platform.

In designing the gantries the need was identified to independently position one or more robots on one, respectively each, side of the work platform using only the single gantry. The single gantry allows for independent control to drive two robots on one side of the work platform to their respective specified locations using high precision.

As also noted above, there can be one gantry positioned adjacent to each inside edge of the work platform for moving one or more robots along a length of the work platform .

The gantry can be constructed of a steel main square support tube preferably anchored near a riser at one end, i.e., a forward end of the base platform so that the weight of the gantry may be supported from the forward end of the base platform.

A remainder of the steel main square support tube can be cantilevered and positioned above the base platform towards another end, i.e., an aft end of the base platform so that the gantry can be isolated from motion of the work platform.

The steel main square support tube can then be coupled to the end-of-platform support at the aft end of the base platform .

Another gantry may be present on the other side of the work platform in a mirror image of the first gantry.

The main square support tube can be comprised of two guide rails, preferably comprising an upper guide rail and a lower guide rail.

Each of the individual support stands can include a bracket that mounts the base to the guide rails of the gantry to provide for movement and support of the individual support stand and the robot thereon.

The base platform and work platform can be positioned within a fuselage assembly of an aircraft.

The disclosure also relates to an apparatus for positioning robots along a gantry, comprising:
a base platform;
a work platform positioned above the base platform for supporting one or more humans;
one or more robots supported on a gantry.

The gantry can be positioned relative to the base platform.

The gantry is preferably positioned above the base platform and adjacent the work platform, and supports and positions the robots along the work platform.

The gantry may comprise one or more drive belts for independently positioning the one or more robots along the gantry to specified locations.

Preferably the gantry is a belt drive dual robot gantry, which may be constructed of a steel square gantry that can be anchored and cantilevered so that its weight is supported from a forward end of the platform.

Preferably it is equipped with a dual belt drive system for driving robot mount systems independently.

The belt system can run a return side internal to the gantry's main square support tube. An external face can have two rail guide systems that each robot carrier can be mounted to.

The belts on the external face can each attach to one of the robot carriers with a tensioning block.

Pulleys can be used to position drive motors near an entrance for ease of access and for maintenance.

Communication cables and service / product tubes can be mounted below the gantry and may follow each robot carrier by connecting to a dedicated cable track.

The disclosure also refers to a method using such an comprising:
providing a base platform;
positioning a work platform above the base platform for supporting one or more humans;
supporting one or more robots on a gantry.

The gantry is preferably disposed relative to the base platform, whereby the base platform can be operated either dependent on or independently from the base platform.

The gantry can be positioned above the base platform and adjacent the work platform, for supporting and positioning the robots along the work platform.

The robots can be drivingly positioned along the gantry.

According to an example an apparatus for positioning robots along a gantry comprises
a base platform; a work platform positioned above the base platform for supporting one or more humans; and one or more robots driven along the gantry relative to the base platform.

The gantry can be positioned between the base platform and the work platform.

Each robot can be connected to the gantry with a support stand.

The gantry may provide position support of the one or more robots along the work platform.

The gantry may comprise one or more drive belts for independently positioning the one or more robots along the gantry to specified locations.

The gantry may comprise one or more drive belts for independently positioning a plurality of the robots along the gantry to specified locations.

The drive belts can move each of the one or more robots laterally along one side of the work platform.

The drive belts can be positioned vertically relative to each other.

The drive belts can move each of the robots laterally along one side of the work platform, except for spaces occupied by other robots.

One or more bearing blocks can be coupled to the support stand.

A bearing block can be coupled to each end of the drive belts.

Each bearing block can be coupled with a belt tensioning mechanism.

A bracket can include the one or more bearing blocks that are attached to ends of a drive belt, and a belt tensioning mechanism that connects the bearing blocks to ensure that a proper tension is maintained on the drive belt.

Each of the drive belts may include a motor and one or more pulleys, and the motor can be positioned at one end of the work platform adjacent an access panel for ease of access for maintenance.

A bracket can be coupled to the individual support stand.

In another example a method of positioning robots is provided comprising
positioning a work platform for supporting one or more humans; supporting one or more robots on a gantry relative to the work platform; and drivingly positioning one or more robots on along the gantry.

A gantry can be positioned below a work platform and above a base platform.

The base platform can be located independently of the work platform.

Each robot can be connected to the gantry with a support stand.

The one or more robots can be supported in position on the gantry along the work platform.

The one or more robots can be driven along the gantry with one or more drive belts.

The one or more robots can be independently positioned along the gantry to specified locations.

Each of the one or more robots can be laterally moved along a side of the work platform.

The drive belts can be vertically positioned relative to each other.

Each of the one or more robots can be coupled to the gantry with a support stand.

One or more bearing blocks can be coupled to the support stand.

A bearing block can be coupled to each end of the drive belts.

Each bearing block can be coupled with a belt tensioning mechanism.

Each drive belt can be tensioned.

Each of the drive belts can be motor driven.

A bracket can be coupled to the support stand.

The disclosure will now be discussed with reference to the following description and drawings.

### DRAWINGS

Referring now to the drawings in which like reference numbers represent corresponding parts throughout:
FIG. 1 illustrates a typical work cell layout for assembly of an aircraft fuselage.
FIGS. 2A and 2B are perspective side and top views of the work cell layout.
FIGS. 3A and 3B further illustrate a configuration of a work platform, wherein FIG. 3A is a side perspective view of the work platform and FIG. 3B is a bottom view of the work platform showing its underside.
FIGS. 4A, 4B and 4C further illustrate the configuration of the work platform, robots, gantries and cable carrier system, wherein FIG. 4A is a side perspective view of the work platform, robots and gantries; FIG. 4B is a top view of the work platform, robots and gantries; and FIG. 4C is a bottom view of the work platform, robots, gantries and cable carrier system, showing their underside.
FIG. 5 is a cutaway view of the work platform positioned above the base platform, wherein the cutaway view shows only half of the work platform.
FIG. 6 provides a view where the work platform has been removed, leaving only the gantries, cable carrier system, individual support stands and robots.
FIG. 7 is another view of the gantry on one side of the work platform, as well as the individual support stands attached to the gantry, with the robots omitted.
FIG. 8 is another view of the gantry on one side of the work platform, as well as the individual support stands attached to the gantry, showing details of the dual drive belts.
FIG. 9 illustrates the steps of an aircraft manufacturing and service method.
FIG. 10 illustrates an aircraft and its components.

According to another example an apparatus for positioning robots using a gantry, comprises a base platform; a work platform positioned above the base platform for supporting one or more humans; one or more robots supported on the base platform independently of the work platform; and at least one gantry, positioned above the base platform and adjacent the work platform, for supporting and positioning the robots along the work platform.

Each of the robots can be placed upon an individual support stand that is attached to the gantry.

The individual support stand may include a base that extends underneath the gantry to counter-balance the individual support stand and the robot placed thereon.

The gantry can be comprised of one or more guide rails, and the individual support stand includes a bracket that mounts the base to the guide rails to provide for movement and support of the individual support stand and the robot placed thereon.

The individual support stand can be cantilevered from the guide rails, so that the individual support stand and the robot placed thereon are supported from an inboard side of the gantry.

Cables for the robots can be supported by the base of the individual support stand, and are routed through an aperture in the bracket of the individual support stand to the robot placed thereon.

The bracket may include one or more bearing blocks that are attached to ends of a drive belt, and a belt tensioning mechanism that connects the bearing blocks to ensure that a proper tension is maintained on the drive belt.

The gantry may comprise a plurality of drive belts for independently positioning a plurality of the robots on the gantry to specified locations.

The drive belts can be positioned vertically relative to each other.

The drive belts can move each of the robots laterally along one side of the work platform.

The drive belts can move each of the robots laterally along one side of the work platform, except for spaces occupied by other robots.

Each of the drive belts may include a motor and one or more pulleys, and the motor is positioned at one end of the work platform adjacent an access panel for ease of access for maintenance.

The gantry can be positioned along an edge of the work platform and at least partially underneath the work platform.

The gantry may comprise a plurality of gantries on multiple sides of the work platform.

The gantry can be anchored and cantilevered at one end of the base platform, so that a remainder of the gantry is positioned above the base platform.

According to another example a method of positioning robots using a gantry is provided comprising providing a base platform; positioning a work platform above the base platform for supporting one or more humans; supporting one or more robots on the base platform independently of the work platform; and positioning at least one gantry, above the base platform and adjacent the work platform, for supporting and positioning the robots along the work platform.

Each of the robots can be placed upon an individual support stand that is attached to the gantry.

The individual support stand can include a base that extends underneath the gantry to counter-balance the individual support stand and the robot placed thereon.

The gantry may be comprised of one or more guide rails, and the individual support stand includes a bracket that mounts the base to the guide rails to provide for movement and support of the individual support stand and the robot placed thereon.

The individual support stand can be cantilevered from the guide rails, so that the individual support stand and the robot placed thereon are supported from an inboard side of the gantry.

Cables for the robots can be supported by the base of the individual support stand, and may be routed through an aperture in the bracket of the individual support stand to the robot placed thereon.

The bracket may include one or more bearing blocks that are attached to ends of a drive belt, and a belt tensioning mechanism that connects the bearing blocks to ensure that a proper tension is maintained on the drive belt.

A plurality of the robots can be independently positioned on the gantry to specified locations using a plurality of drive belts.

The drive belts can be positioned vertically relative to each other.

The drive belts can move each of the robots laterally along one side of the work platform.

The drive belts can move each of the robots laterally along one side of the work platform, except for spaces occupied by other robots.

Each of the drive belts may include a motor and one or more pulleys, and the motor is positioned at one end of the work platform adjacent an access panel for ease of access for maintenance.

The gantry can be positioned along an edge of the work platform and at least partially underneath the work platform.

The gantry may comprise a plurality of gantries on multiple sides of the work platform.

The gantry can be anchored and cantilevered at one end of the base platform, so that a remainder of the gantry is positioned above the base platform.

The base platform can be provided within a fuselage assembly for an aircraft and wherein the work platform is preferably positioned above the base platform in the fuselage assembly.

The method can be used in assembling an aircraft fuselage.

According to a further example, there is provided a system comprising the apparatus and an aircraft fuselage.

According to a further example there is provided the apparatus or the system for assembly of an aircraft fuselage.

### DETAILED DESCRIPTION

In the following description, reference is made to the accompanying drawings which form a part hereof, and in which is shown by way of illustration a specific example in which the disclosure may be practiced. It is to be understood that other examples may be utilized and structural changes may be made without departing from the scope of the claims.

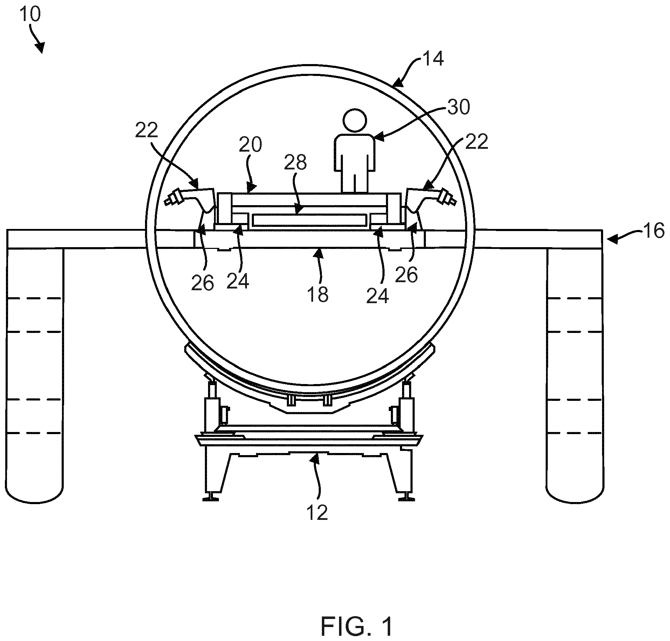

FIG. 1 illustrates a typical work cell 10 layout that includes one or more cradle fixtures 12 to hold and position a fuselage assembly 14 of an aircraft. Currently, robots are used outside the fuselage assembly 14, and some work inside the fuselage assembly 14 is performed by robots as well. However, it is desired to provide an apparatus for stabilized positioning of collaborative robotics inside the fuselage assembly 14.

In this disclosure, the fuselage assembly 14 is positioned adjacent a workstand 16 that includes a base platform 18 positioned inside the fuselage assembly 14. (Some of the support structures for the workstand 16 are omitted from this view in the interests of clarity.) The base platform 18 is independently supported within the fuselage assembly 14 by the workstand 16.

A work platform 20, which is an isolated motion platform, is positioned relative to the base platform 18. The work platform 20 may be positioned above the base platform 18.

One or more robots 22 are positioned inside the fuselage assembly 14 and supported on the base platform 18 independently of the work platform 20, so that any movement of the work platform 20, for example, flexing or shaking due to movement on the work platform 20 does not affect the position of the robots 22 or the base platform 18.

The robots 22 are supported independently of the work platform 20 on gantries 24 positioned on both sides of the work platform 20. The gantries 24 are mounted on and supported by the base platform 18 independently of the work platform 20. The gantries 24, positioned above the base platform 18 and underneath the work platform 20, are used for positioning the robots 22 along a length of the work platform 20. The robots 22 are placed on individual support stands 26, which are mounted on the gantries 24.

The robots 22 are provided with power, control and communication, as well as parts supply and return, via a cable carrier system 28. The cable carrier system 28 is positioned on or above the base platform 18 and underneath the work platform 20 to provide a compact solution for supplying the robots 22.

The work platform 20 has a profile height above the base platform 18 inside of the fuselage assembly 14. This profile height allows humans 30 to access the inside of the fuselage assembly 14 while standing on the work platform 20. The profile height can be 12 inches or less, although other embodiments may have a profile height that is more than 12 inches.

At the same time, the work platform 20 sets the humans 30 at the correct height to easily reach areas of work in the fuselage assembly 14. Moreover, the fuselage assembly 14 may be rotated, so that the humans 30 can reach upper or lower areas of work in the fuselage assembly 14. In one example, there is no need for ladders when the humans 30 work in the fuselage assembly 14.

The robots 22 and individual support stands 26 are positioned on the gantries 24 slightly above the base platform 18, and extend above the work platform 20 to a height necessary to position the robots 22 for an optimum reach within a work area. The robots 22 and individual support stands 26 can have a combined height of about 30 inches, which is about 18 inches above the 12 inch height of the work platform 20, although other embodiments may have a combined height that is less or more than 30 inches.

The base platform 18 and work platform 20 together provide a collaborative workspace for the robots 22 and humans 30 within the fuselage assembly 14. The work platform 20 is isolated from the robots 22 for stabilized positioning of the robots 22. Specifically, the work platform 20 provides isolated support for movement thereon without imparting any motion to the robots 22, thereby eliminating positioning errors caused by flexing, vibrations or fluctuations in the work platform's 20 height due to movement of the work platform 20.

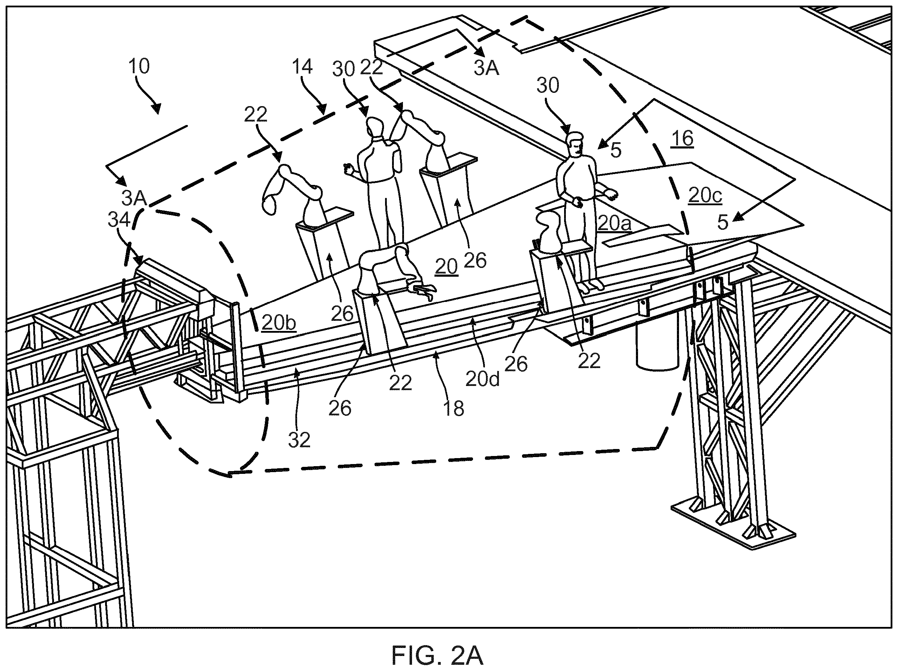

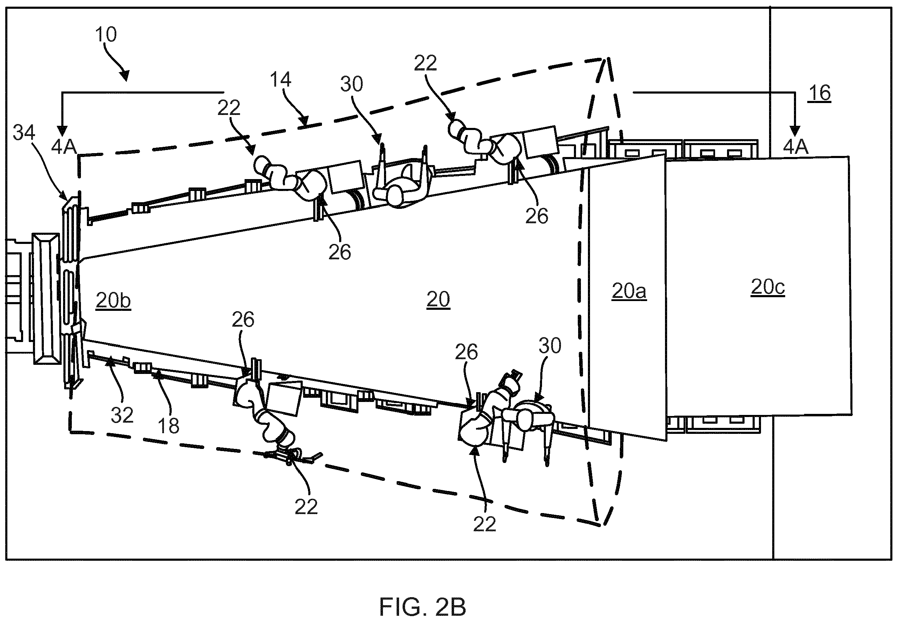

FIGS. 2A and 2B are perspective side and top views of the work cell 10 layout, respectively, with the cradle fixture 12 and fuselage assembly 14 omitted, wherein the shape and position of the fuselage assembly 14 are indicated by dashed lines. These figures show the workstand 16 positioned at one end of the fuselage assembly 14 to independently support the base platform 18, as well as the work platform 20, both of which are suspended within the fuselage assembly 14.

These views illustrate an apparatus for supporting four collaborative robots 22 and humans 30 in a narrowing work envelope, for example, an aft/tail section and a nose section of the fuselage assembly 14. Specifically, the work platform 20 may be narrower than the base platform 18. The work platform 20 is positioned relative to the base platform 18 to provide areas 32 for moving or positioning the robots 22 and individual support stands 26, as well as humans 30, on one or more sides of the work platform 20.

The work platform 20 is tapered along its length, to fit the narrowing fuselage assembly 14, with a front end 20a that is wider than a back end 20b. The front end 20a of the work platform 20 is positioned at a forward end of the fuselage assembly 14 and the back end 20b of the work platform 20 is positioned at an aft end of the fuselage assembly 14.

The tapered configuration of the work platform 20 is used to expose areas 32 of the base platform 18 sufficient for the robots 22 and humans 30 to traverse the base platform 18 and maneuver around the work platform 20 for times when the robots 22 need to be serviced or inspected in position. This tapered configuration also allows the use of the same robots 22 for tapered as well as cylindrical sections of the fuselage assembly 14.

The work platform 20 can have a straight configuration, rather than a tapered configuration. This straight configuration could be used for cylindrical sections of the fuselage assembly 14.

Once the fuselage assembly 14 is in position, an end-of-platform support 34 is positioned and interlocked to the back end 20b of the work platform 20 to secure the position of the work platform 20. The end-of-platform support 34 can comprise a structure that is itself supported independently of the workstand 16 and base platform 18.

The work platform 20 also includes a ramp portion 20c, adjacent the front end 20a, that is secured through the base platform 18 and the workstand 16, wherein the ramp portion 20c promotes human 30 and tool cart access to the work platform 20. In addition, a ledge 20d is provided along one (or both) sides of the work platform 20 for humans 30 to stand on.

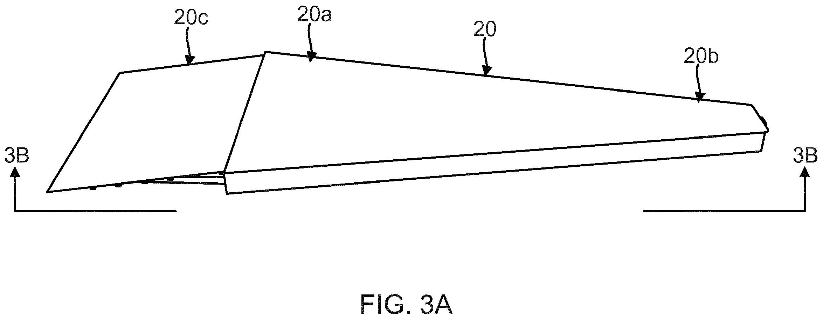

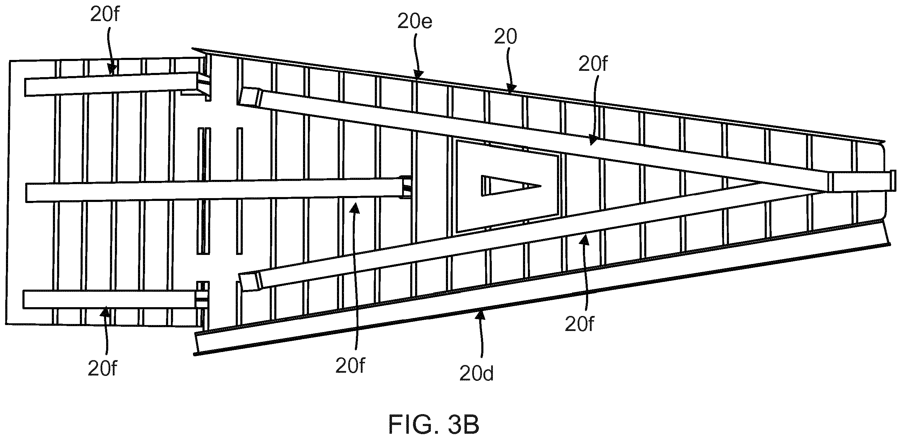

FIGS. 3A and 3B further illustrate the configuration of the work platform 20. FIG. 3A is a side perspective view of the work platform 20, taken on the line 3A-3A of FIG. 2A looking in the direction of the arrows; and FIG. 3B is a bottom view of the work platform 20 showing its underside, taken on the line 3B-3B of FIG. 3A looking in the direction of the arrows.

The work platform 20 can have a tapered configuration, with the wider portion 20a (the front end 20a) at a forward end of the work platform 20 and the narrower portion 20b (the back end 20b) at an aft end of the work platform 20. The work platform 20 also includes the ramp portion 20c adjacent to the front end 20a, which angles downward from the work platform 20 to reside on or above the base platform 18 (not shown).

In addition, the work platform 20 has a planar top surface 20a, 20b, 20c as shown in FIG. 3A and a ribbed bottom surface 20e with longitudinal struts 20f as shown in FIG. 3B. FIG. 3b also shows the underside of the ledge 20d of the work platform 20.

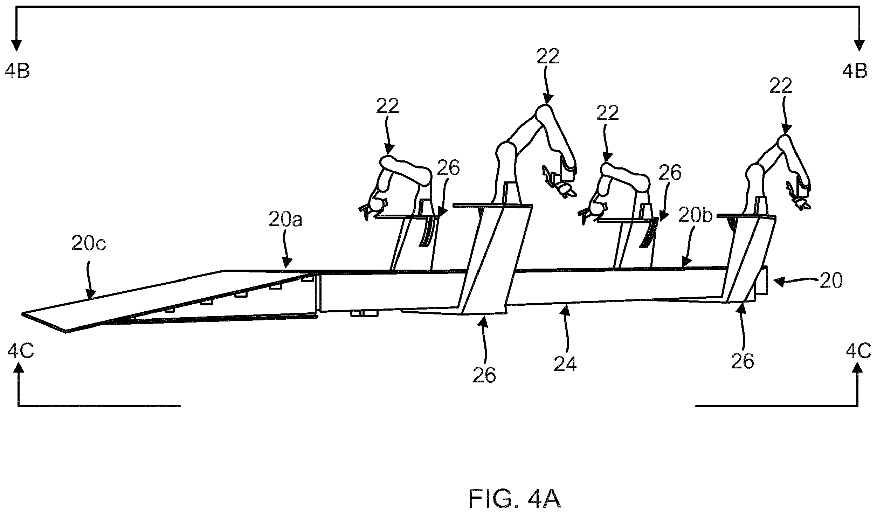

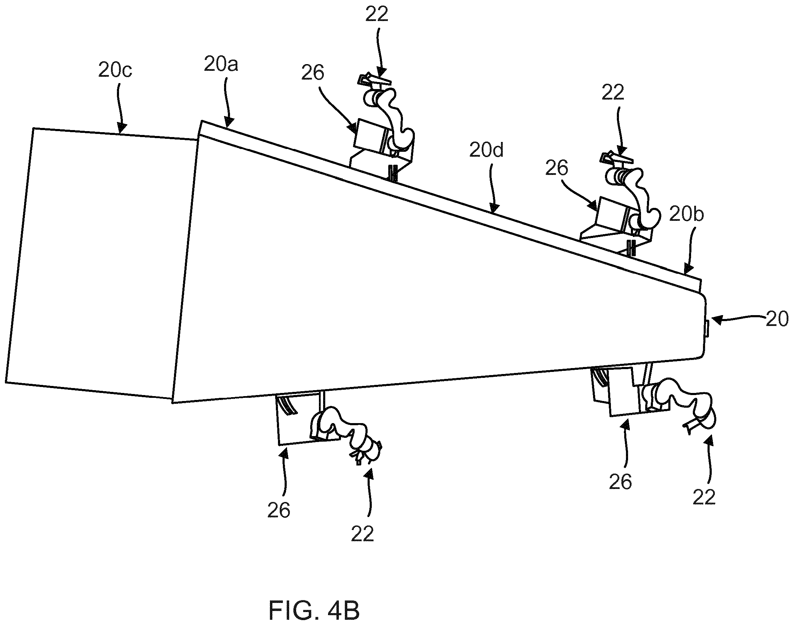

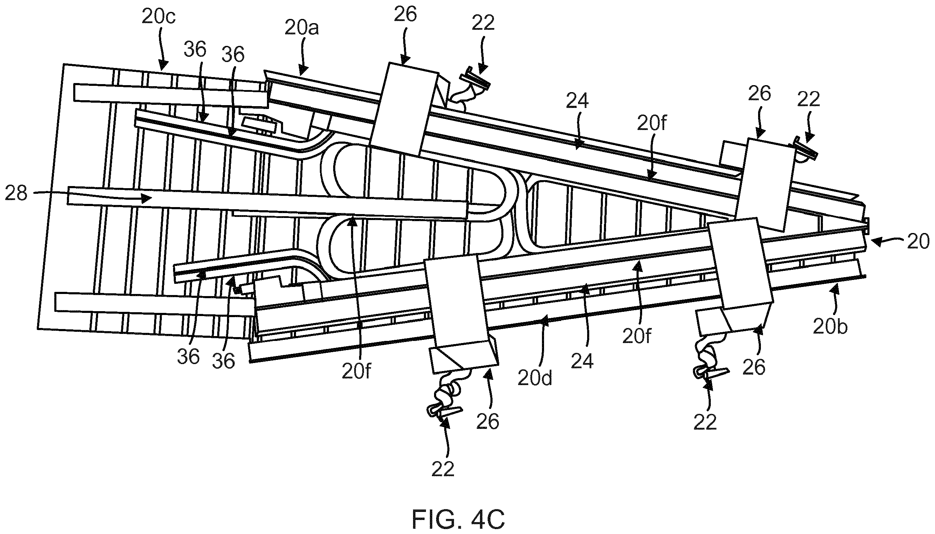

FIGS. 4A, 4B and 4C further illustrate the configuration of the work platform 20, robots 22, gantries 24, individual support stands 26 and cable carrier system 28. FIG. 4A is a side perspective view of the work platform 20 (including the front end 20a, back end 20b and ramp 20c), robots 22, gantries 24 and individual support stands 26, taken on the line 4A-4A of FIG. 2B looking in the direction of the arrows; FIG. 4B is a top view of the work platform 20 (including the front end 20a, back end 20b, ramp 20c and ledge 20d), robots 22, gantries 24 and individual support stands 26, taken on the line 4B-4B of FIG. 4A looking in the direction of the arrows; and FIG. 4C is a bottom view of the work platform 20 (including the front end 20a, back end 20b, ramp 20c, ledge 20d and struts 20f), robots 22, gantries 24, individual support stands 26 and cable carrier system 28, taken on the line 4C-4C of FIG. 4A looking in the direction of the arrows.

There may be separate gantries 24 on each side of the work platform 20. Each of the robots 22 are placed upon an individual support stand 26 that is attached to their respective gantries 24. The robots 22 and the individual support stands 26 are fully supported by the gantries 24, which in turn are supported by the base platform 18 (not shown), and are not affected by motion of the work platform 20.

In designing the gantries 24, the need was identified to independently position two robots 22 on each side of the work platform 20 using only a single gantry 24. Current systems only allow for one robot to be positioned along a gantry 24. The single gantry 24 can allow for independent control to drive two robots 22 on one side of the work platform 20 to their respective specified locations using high precision.

Each of the two robots 22 on one side of the work platform 20 are moved laterally along the side of the work platform 20 via the single gantry 24. Specifically, the gantry 24 allows each of the robots 22 to travel a substantial portion of the length of the work platform 20 on one side of the work platform 20, except for the space occupied by the other robot 22, as well as the space on the opposite side of the other robot 22.

The cable carrier system 28 can be positioned at least partially underneath the work platform 20 and conforms to a tapered configuration of the work platform 20. The cable carrier system 28 provides a set of cables 36 for each of the robots 22. Although shown as individual elements, each of the cables 36 may comprise a bundle of power, control and communication cables, as well as parts supply and return tubes.

The cable carrier system 28 is designed to be integrated with the work platform 20, but can be used independently of it. In designing the cable carrier system 28, there were no available concepts for stacking and nesting two pairs of cables 36 that would provide service to four robots 22 in a narrowing tapered configuration, within a compact space between the base platform 18 and the work platform 20. The cable carrier system 28 provides a unique method for stacking and nesting pairs of the cables 36 to the robots 22 on each side of the work platform 20, while keeping the cables 36 from interfering with each other and still allowing for a full range of motion.

In addition, the longitudinal struts 20f of the work platform 20 support at least portions of the cables 36 above the base platform 18, for stacking the pairs of cables 36, so that they do not interfere with each other. Specifically, an upper cable 36 in a pair is supported by the longitudinal struts 20f above a lower cable 36 in the pair, which allows the upper cable 36 to glide over the lower cable and the lower cable 36 to glide under the upper cable 36, without the cables 36 making contact.

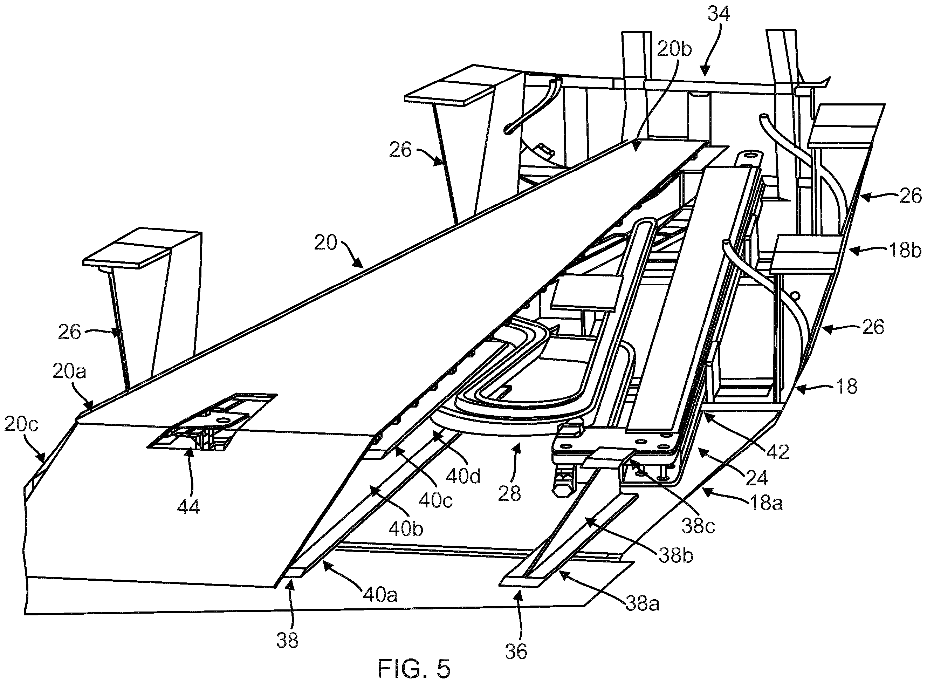

FIG. 5 is a cutaway view of the work platform 20 positioned above the base platform 18, wherein the cutaway view shows only the left half of the work platform 20, with the right half of the work platform 20 removed, taken on the line 5-5 of FIG. 2A looking in the direction of the arrows.

The front end 20a of the work platform 20 is mounted on one or more risers 38, 40 mounted on the base platform 18, while the back end 20b of the work platform 20 is cantilevered above the base platform 18. Once the fuselage assembly 14 is in position, the end-of-platform support 34 is positioned and interlocked to the back end 20b of the work platform 20 to secure the position of the work platform 20.

The riser 38 is also a support structure, and is comprised of a bottom flange 38a, a triangular-shaped vertical web element 38b, and a top flange 38c, wherein the triangular-shaped vertical web element 38b connects the bottom flange 38a to the top flange 38c. The bottom flange 38a is mounted on the base platform 18, and the work platform 20 is mounted on the top flange 38c.

Similarly, the riser 40 is a support structure, and is comprised of a bottom flange 40a, a triangular-shaped vertical web element 40b, and a top flange 40c, wherein the triangular-shaped vertical web element 40b connects the bottom flange 40a to the top flange 40c. The bottom flange 40a is mounted on the base platform 18, and the work platform 20 is mounted on the top flange 40c.

Note that only a portion of the riser 40 is shown with the right half of the work platform 20 removed, e.g., about half of the riser 40, with the remaining portion of the riser 40 hidden underneath the left half of the work platform 20. Note also that there is another riser 38 hidden underneath the left half of the work platform 20, wherein the hidden riser 38 is positioned on the opposite side of the riser 38 shown in FIG. 5.

The ramp portion 20c of the work platform 20 is also mounted on the risers 38, 40 to provide easy access from the base platform 18. The ramp portion 20c of the work platform 20 is supported on or above the triangular-shaped vertical web element 38b. The ramp portion 20c of the work platform 20 also is supported on or above the triangular-shaped vertical web element 40b.

The risers 38, 40 for the work platform 20 are positioned on the base platform 18 in such a way that they do not interfere with the gantries 24 or the cable carrier system 28. The risers 38, 40 allow the gantries 24 and the cable carrier system 28 to be positioned between the work platform 20 and the base platform 18.

The riser 40 may also include a support section 40d for at least portions of the cables 36 positioned midway up the vertical web element 40b, for stacking the pairs of cables 36, so that they do not interfere with each other. Specifically, an upper cable 36 in a pair is supported by the support section 40d above a lower cable 36 in the pair, which allows the upper cable 36 to glide over the lower cable and the lower cable 36 to glide under the upper cable 36, without the cables 36 making contact.

As noted above, there may be one gantry 24 positioned adjacent to each inside edge of the work platform 20 for moving the robots 22 along a length of the work platform 20. The gantry 24 is constructed of a steel main square support tube 42 that is anchored near the riser 38 at one end, i.e., a forward end 18a, of the base platform 18, so that the weight of the gantry 24 is supported from the forward end 18a of the base platform 18. A remainder of the steel main square support tube 42 is cantilevered and positioned above the base platform 18 towards another end, i.e., an aft end 18b, of the base platform 18, so that the gantry 24 is isolated from motion of the work platform 20. The steel main square support tube 42 is then coupled to the end-of-platform support 34 at the aft end 18b of the base platform 18. Another gantry 24 is present on the left side of the work platform 20, in a mirror image of the gantry 24 shown, but is obscured by the work platform 20 in this view.

The work platform 20 also includes one or more removable access panels 44. In the example of FIG. 5, there is one access panel 44 in the left half of the work platform 20 shown, but there would be similarly placed access panel in the right half of the work platform 20 that is omitted. The removable access panels 44 are designed to provide access to components of the gantry 24 and cable carrier system 28 underneath the work platform 20, e.g., for repair, installation and/or removal.

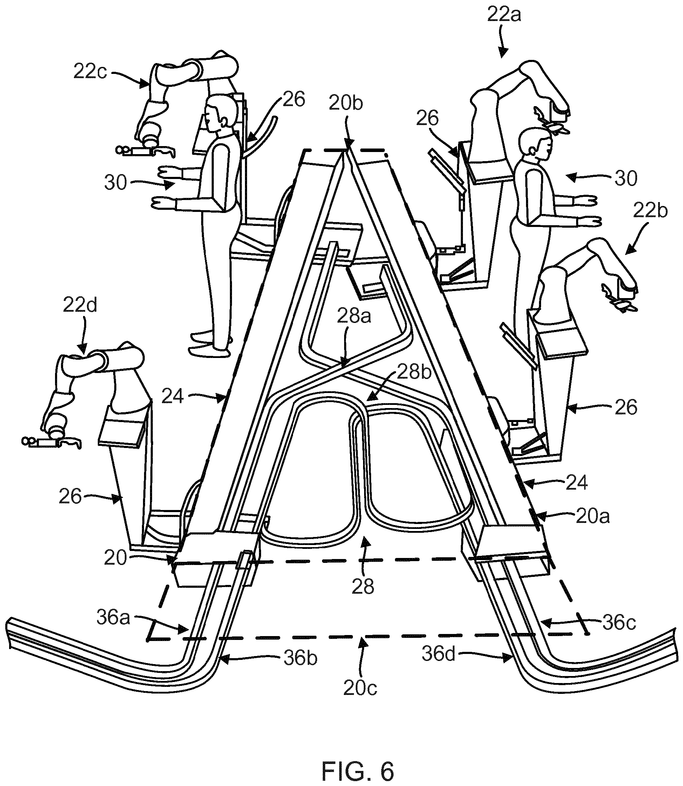

FIG. 6 provides a view where the work platform 20 has been removed, but with its outline indicated in dashed lines, leaving only the robots 22, gantries 24, individual support stands 26 and cable carrier system 28.

The cable carrier system 28 maintains the cables 36a, 36b, 36c, 36d in a crossover configuration in the space between the base platform 18 and the work platform 20. Specifically, the cable carrier system 28 positions the four cables 36a, 36b, 36c, 36d to independently supply the four robots 22a, 22b, 22c, 22d without interfering with each other and still allowing for a full range of motion for the cables 36a, 36b, 36c, 36d.

The shape of the work platform 20 helps to guide the cable carrier system 28. In addition, sections of the cables 36a and 36c are pinned at 28a and sections of the cables 36b and 36d are pinned at 28b, where they crossover, in order to pivot, which allows the cables 36a, 36b, 36c, 36d to go from a minimum to maximum radius without sliding from the pinned locations at 28a, 28b, which keeps the correct amount of cable 36a, 36b, 36c, 36d in place at all times. The pinning of the cables 36a, 36b, 36c, 36d at 28a, 28b prevents the cables 36a, 36b, 36c, 36d from slipping backward through the crossover area and interfering with any opposing set of cables 36a, 36b, 36c, 36d.

The cables 36a, 36b or 36c, 36d for the robots 22a, 22b or 22c, 22d on a first side of the work platform 20 are fed in from a second side of the work platform 20 opposite the first side of the work platform 20 at a first end of the work platform 20, and the cables 36a, 36b or 36c, 36d for the robots 22a, 22b or 22c, 22d on the second side of the work platform 20 are fed in from the first side of the work platform 20 opposite the second side of the work platform 20 at the first end of the work platform 20. For example, the cables 36a, 36b for the two robots 22a, 22b on a right-side of the work platform 20 lay on the base platform 18 and are fed in from a left-side of the base platform 18 at the front end 20a of the work platform 20. The cables 36c, 36d for the two robots 22c, 22d on the left-side of the work platform 20 are fed in from the right-side of the work platform 20 at the front end 20a of the work platform 20.

In the cable carrier system 28, the cables 36a, 36b, 36c, 36d are crisscrossed to communicate with the robots 22a, 22b, 22c, 22d, so that the cables 36a, 36b, 36c, 36d flow from adjacent the front end 20a on one side of the work platform 20 to adjacent the back end 20b and the front end 20a on an opposite side of the work platform 20. For example, cable 36a connects to robot 22a; cable 36b connects to robot 22b; cable 36c connects to robot 22c; and cable 36d connects to robot 22d. Cables 36a and 36b flow from adjacent the front end 20a of the work platform 20 on the left-side of the work platform 20 to adjacent the back end 20b and the front end 20a of the work platform 20 on the right-side of the work platform 20. Cables 36c and 36d flow from adjacent the front end 20a of the work platform 20 on the right-side of the work platform 20 to adjacent the back end 20b and the front end 20a of the work platform 20 on the left-side of the work platform 20.

The cables 36a, 36b, 36c, 36d are stacked and nested so that a first one of the cables 36a, 36b or 36c, 36d can reach any location aft (towards the back end 20b) of a second one of the cables 36b, 36a or 36d, 36c, and the second one of the cables 36a, 36b or 36c, 36d can reach any location forward (towards the front end 20a) of the first one of the cables 36b, 36a or 36d, 36c. For example, the cables 36a, 36b are stacked and nested so that the cable 36a can reach any location aft (towards the back end 20b) of the cable 36b and the cable 36b can reach any location forward (towards the front end 20a) of the cable 36a. Similarly, the cables 36c, 36d are stacked and nested so that the cable 36c can reach any location aft (towards the back end 20b) of the cable 36d and the cable 36d can reach any location forward (towards the front end 20a) of the cable 36c.

In addition, the cables 36a, 36b, 36c, 36d are stacked and nested, so that on each side of the work platform 20, a first one of the robots 22a, 22b, 22c, 22d can travel towards a first end (20a or 20b) of the work platform 20, while a second one of the robots 22a, 22b, 22c, 22d travels towards a second end (20b or 20a) of the work platform 20, without the cables 36a, 36b, 36c, 36d interfering with each other. For example, one robot 22a can travel towards the front end 20a of the work platform 20, while another robot 22b travels towards the back end 20b of the work platform 20, without the cables 36a, 36b interfering with each other; and one robot 22c can travel towards the front end 20a of the work platform 20, while another robot 22d travels towards the back end 20b of the work platform 20, without the cables 36c, 36d interfering with each other.

Otherwise, there would be the problem of potential restriction of movement of the four robots 22a, 22b, 22c, 22d. Current cable track systems do not nest and stack in a crossing pattern to provide the full reach that is required in this configuration. The cable carrier system 28 allows for the cables 38, 38b, 38c, 38d to be connected to the robots 22a, 22b, 22c, 22d in a very small workspace while not interfering with each other.

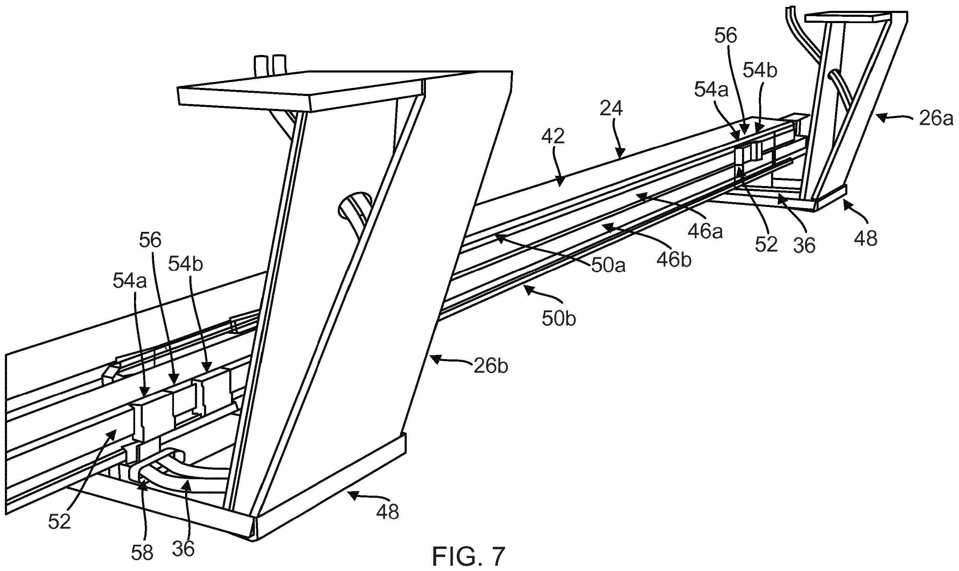

FIG. 7 is another view of the gantry 24 on one side of the work platform 20 (not shown), as well as the individual support stands 26a, 26b attached to the gantry 24, with the robots 22 omitted. In designing the gantry 24, the need was identified to independently position two robots 22 by using only a single gantry 24. Current systems only allow for one robot to be positioned along a gantry. This system allows for independent control to drive both robots 22 to specified locations on a single gantry 24 using high precision.

The gantry 24 includes a plurality of drive belts 46a, 46b for independently positioning the individual support stands 26a, 26b (and the robots 22 placed thereon). There can be two belts 46a, 46b running along the length of the gantry 24, wherein the two belts 46a, 46b are positioned vertically with respect to each other. The top belt 46a can drive the aft individual support stand 26a, and the bottom belt 46b can drive the forward individual support stand 26b, although this may be reversed in other embodiments.

Each of the individual support stands 26a, 26b on one side of the work platform 20 are moved laterally along the side of the work platform 20 via the drive belts 46a, 46b. Specifically, the drive belts 46a, 46b allow each of the individual support stands 26a, 26b to travel the length of the work platform 20, except for the space occupied by the other individual support stand 26a, 26b, on one side of the work platform 20.

Each of the individual support stand 26a, 26b includes a base 48 that extends underneath the main square support tube 42 of the gantry 24 to counter-balance the individual support stand 26a, 26b (and the robot 22 placed thereon).

The main square support tube 42 is comprised of two guide rails 50a, 50b, comprising an upper guide rail 50a and a lower guide rail 50b. Each of the individual support stands 26a, 26b includes a bracket 52 that mounts the base 48 to the guide rails 50a, 50b of the gantry 24 to provide for movement and support of the individual support stand 26a, 26b (and the robot 22 placed thereon).

Each of the individual support stands 26a, 26b are cantilevered from the rails 50a, 50b, so that the individual support stand 26a, 26b (and the robot 22 placed thereon) are supported from an inboard side of the gantry 24, and the weight of the individual support stand 26a, 26b and the robots 22 does not affect either the base platform 18 during positioning of the fuselage assembly 14 or the work platform 20.

The bracket 52 of the individual support stands 26a, 26b also includes one or more bearing blocks 54a, 54b that are attached to both ends of one of the drive belts 46a, 46b. A belt tensioning mechanism 56 connects the bearing blocks 54a, 54b and ensures that a proper tension is maintained on the drive belt 46a, 46b.

Cables 36 for the robots 22 are supported by the base 48 of the individual support stand 26a, 26b, and are routed through an aperture 58 in the bracket 52 of the individual support stand 26a, 26b to the robot 22 placed thereon.

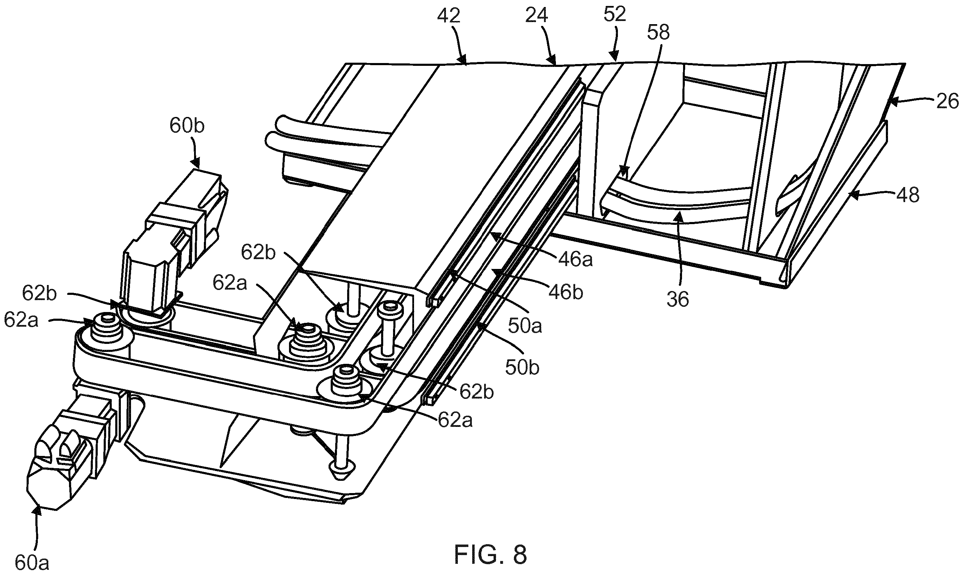

FIG. 8 is another view of the gantry 24 on one side of the work platform 20, as well as the individual support stands 26 attached to the gantry 24, showing details of the dual drive belt 46a, 46b.

Each of the belts 46a, 46b includes a motor 60a, 60b, and one or more pulleys 62a, 62b. Specifically, the top belt 46a is driven by pulley motor 60a, wherein the belt 46a is wrapped around pulleys 62a, and the bottom belt 46b is driven by pulley motor 60b, wherein the belt 46b is wrapped around pulleys 62b. Pulleys 62a, 62b are used so that the drive motors 60a, 60b are positioned near a forward end of the work platform 20 for ease of access for maintenance via access panels 44. A similar configuration of pulleys 62a, 62b are positioned at the other end of the gantry 24, but without the motors 60a, 60b.

The forward sides of the belts 46a, 46b are exposed on the main square support tube 42 between the upper rail guide 50a and lower rail guide 50b. The return sides of the belts 46a, 46b are internal to the main square support tube 42.

Finally, cabling 36 for the robot 22 lays in the base 48, threads through the aperture 58 in the bracket 52, and extends underneath the lower guide rail 50b as well as the belts 46a, 46b.

### Airplane Assembly

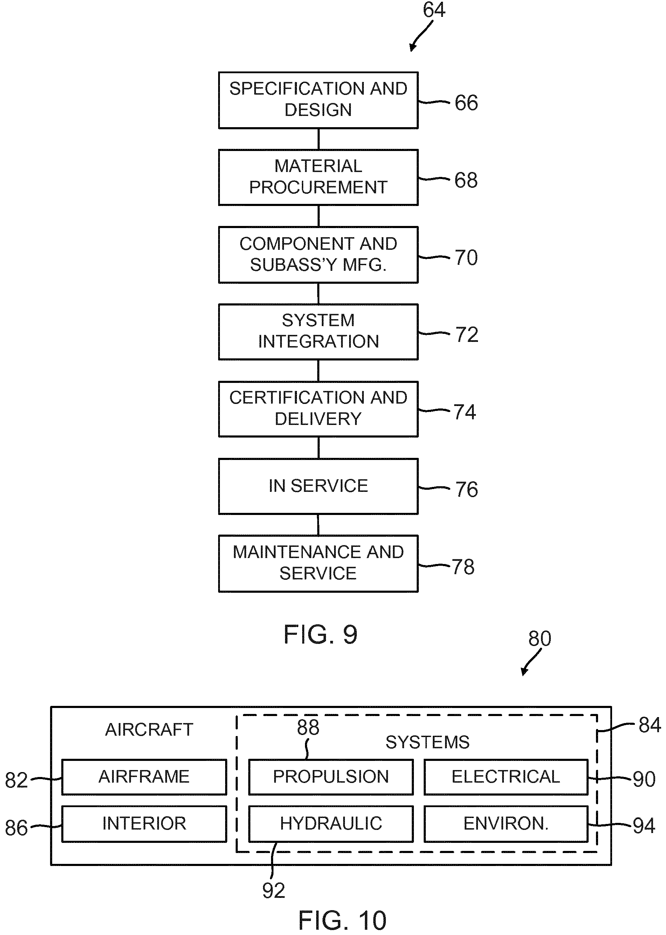

The disclosure may be described in the context of an aircraft manufacturing and service method 64 comprised of steps 66-78 as shown in FIG. 9 and an aircraft 80 comprised of components 82-94 as shown in FIG. 10.

As shown in FIG. 9, during pre-production, exemplary method 64 may include specification and design 66 of the aircraft 80 and material procurement 68. During production, component and subassembly manufacturing 70 and system integration 72 of the aircraft 80 takes place. Thereafter, the aircraft 80 may go through certification and delivery 74 in order to be placed in service 76. While in service 76 by a customer, the aircraft 80 is scheduled for routine maintenance and service 78 (which includes modification, reconfiguration, refurbishment, and so on). The base platform 18, work platform 20, robots 22 and other elements as described herein can be used at least in steps 70 and 72 of method 64.

Each of the processes of method 64 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in FIG. 10, the aircraft 80 produced by exemplary method 64 may include an airframe 82 with a plurality of systems 84 and an interior 86. Examples of high-level systems 84 include one or more of a propulsion system 88, an electrical system 90, a hydraulic system 92, and an environmental system 94. Any number of other systems may be included. Although an aerospace example is shown, the principles of the disclosure may be applied to other industries, such as the automotive industry.

Apparatus and methods embodied herein may be employed during any one or more of the stages of the production method 64. For example, components or subassemblies corresponding to production process 70 may be fabricated or manufactured in a manner similar to components or subassemblies produced while the aircraft 80 is in service 76. Also, one or more apparatus embodiments, method embodiments, or a combination thereof may be utilized during the production stages 70 and 72, for example, by substantially expediting assembly of or reducing the cost of an aircraft 80. Similarly, one or more of apparatus embodiments, method embodiments, or a combination thereof may be utilized while the aircraft 80 is in service 76, for example and without limitation, to maintenance and service 78.

## Claims

1. An apparatus for positioning one or more robots using a gantry, comprising:
a base platform (18);
a work platform (20) positioned above the base platform (18) for supporting one or more humans;
one or more robots (22) supported on the base platform (18) independently of the work platform (20);
at least one gantry (24), positioned above the base platform (18) and adjacent the work platform (20) , for supporting and positioning the one or more robots (22) along the work platform (20),
wherein each of the one or more robots (22) is placed upon an individual support stand (26) that is attached to the gantry (24), and
wherein the individual support stand (26) includes a base (48) that extends underneath the gantry (24) to counter-balance the individual support stand (26) and the robot (22) placed thereon.

2. The apparatus of claim 1, wherein the gantry (24) is comprised of one or more guide rails (50), and the individual support stand (26) includes a bracket (52) that mounts the base (48) to the guide rails (50) to provide for movement and support of the individual support stand (26) and the robot (22) placed thereon.

3. The apparatus of claim 2, wherein the individual support stand (26) is cantilevered from the guide rails (50), so that the individual support stand (26) and the robot (22) placed thereon are supported from an inboard side of the gantry (24).

4. The apparatus of any of the claims 2 or 3, wherein the bracket (52) includes one or more bearing blocks (54a, 54b) that are attached to ends of a drive belt (46a,46b), and a belt tensioning mechanism (56) that connects the bearing blocks (54a,54b) to ensure that a proper tension is maintained on the drive belt (46a,46b).

5. The apparatus of any of the preceding claims, wherein the gantry (24) comprises a plurality of drive belts (46a, 46b) for independently positioning a plurality of the robots (22) on the gantry (24) to specified locations.

6. The apparatus of claim 5, wherein the drive belts (46a, 46b) are positioned vertically relative to each other.

7. The apparatus of claim 5 or 6, wherein the drive belts (46a, 46b) move each of the robots (22) laterally along one side of the work platform (20).

8. The apparatus of any of the claims 5-7, wherein each of the drive belts (46a, 46b) includes a motor (60a, 60b) and one or more pulleys (62a, 62b), and the motor (60a, 60b) is positioned at one end of the work platform (20) adjacent an access panel (44) for ease of access for maintenance.

9. The apparatus of any of the preceding claims, wherein the gantry (24) is positioned along an edge of the work platform (20) and at least partially underneath the work platform (20).

10. The apparatus of any of the preceding claims, wherein the at least one gantry (24) comprises a plurality of gantries (24) on multiple sides of the work platform (20).

11. The apparatus of any of the preceding claims, wherein the gantry (24) is anchored and cantilevered at one end of the base platform (18), so that a remainder of the gantry (24) is positioned above the base platform (18).

12. A method of positioning one or more robots (22) using a gantry (24), comprising:
providing a base platform (18);
positioning a work platform (20) above the base platform (18) for supporting one or more humans;
supporting one or more robots (22) on the base platform (18) independently of the work platform (20);
positioning at least one gantry (24) above the base platform (18) and adjacent the work platform (20) for supporting and positioning the one or more robots (22) along the work platform (20),
placing each of the one or more robots (22) upon an individual support stand (26) that is attached to the gantry (24), and
counter balancing the individual support stand (26) and the robot (22) placed thereon by way of a base (48) extending underneath the gantry (24).

13. The method of claim 12, further comprising independently positioning a plurality of the robots (22) on the gantry (24) to specified locations using a plurality of drive belts (46a, 46b).

14. The method of claim 13, wherein the drive belts (46a, 46b) are positioned vertically relative to each other.

15. The method of claim 13 or 14, wherein the drive belts (46a, 46b) move each of the robots (22) laterally along one side of the work platform (20).

## Patentansprüche

1. Vorrichtung zur Positionierung eines oder mehrerer Roboter unter Verwendung eines Gerüsts, umfassend:
eine Basisplattform (18);
eine oberhalb der Basisplattform (18) angeordnete Arbeitsplattform (20) zum Tragen eines oder mehrerer Menschen;
einen oder mehrere Roboter (22), die unabhängig von der Arbeitsplattform (20) auf der Basisplattform (18) getragen werden;
mindestens ein Gerüst (24), das oberhalb der Basisplattform (18) und angrenzend zu der Arbeitsplattform (20) angeordnet ist, zum Tragen und Positionieren eines oder mehrerer der Roboter (22) entlang der Arbeitsplattform (20),
wobei jeder der einen oder mehreren Roboter (22) auf einem an dem Gerüst (24) befestigten einzelnen Traggestell (26) angeordnet ist, und
wobei das einzelne Traggestell (26) eine Basis (48), die sich unter dem Gerüst (24) erstreckt, zum Ausbalancieren des einzelnen Traggestells (26) und des darauf angeordneten Roboters (22) umfasst.

2. Vorrichtung nach Anspruch 1, wobei das Gerüst (24) aus einer oder mehreren Führungsschienen (50) besteht und das einzelne Traggestell (26) eine Halterung (52) umfasst, mittels der die Basis (48) an den Führungsschienen (50) befestigt ist, um ein Bewegen und Stützen des einzelnen Traggestells (26) und des darauf angeordneten Roboters (22) zu ermöglichen.

3. Vorrichtung nach Anspruch 2, wobei das einzelne Traggestell (26) von den Führungsschienen (50) freitragend ist, so dass das einzelne Traggestell (26) und der darauf angeordnete Roboter (22) von einer Innenseite des Gerüsts (24) getragen werden.

4. Vorrichtung nach einem der Ansprüche 2 oder 3, wobei die Halterung (52) Folgendes umfasst: einen oder mehrere Lagerblöcke (54a, 54b), die an Enden eines Antriebsriemens (46a, 46b) befestigt sind, und einen Riemenspannmechanismus (56), der die Lagerblöcke (54a, 54b) verbindet, um sicherzustellen, dass eine angemessene Spannung auf dem Antriebsriemen (46a, 46b) aufrechterhalten wird.

5. Vorrichtung nach einem der vorhergehenden Ansprüche, wobei das Gerüst (24) eine Vielzahl von Antriebsriemen (46a, 46b) zum unabhängigen Positionieren einer Vielzahl von Robotern (22) auf dem Gerüst (24) an bestimmten Stellen umfasst.

6. Vorrichtung nach Anspruch 5, wobei die Antriebsriemen (46a, 46b) vertikal zueinander angeordnet sind.

7. Vorrichtung nach Anspruch 5 oder 6, wobei die Antriebsriemen (46a, 46b) jeden der Roboter (22) seitlich entlang einer Seite der Arbeitsplattform (20) bewegen.

8. Vorrichtung nach einem der Ansprüche 5 bis 7, wobei jeder der Antriebsriemen (46a, 46b) einen Motor (60a, 60b) und eine oder mehrere Riemenscheiben (62a, 62b) enthält und der Motor (60a, 60b) an einem Ende der Arbeitsplattform (20) in der Nähe einer Zugangsplatte (44) angeordnet ist, um den Zugang für Wartungsarbeiten zu erleichtern.

9. Vorrichtung nach einem der vorhergehenden Ansprüche, wobei das Gerüst (24) entlang einer Kante der Arbeitsplattform (20) und mindestens teilweise unterhalb der Arbeitsplattform (20) angeordnet ist.

10. Vorrichtung nach einem der vorhergehenden Ansprüche, wobei das mindestens eine Gerüst (24) eine Vielzahl von Gerüsten (24) auf mehreren Seiten der Arbeitsplattform (20) umfasst.

11. Vorrichtung nach einem der vorhergehenden Ansprüche, wobei das Gerüst (24) an einem Ende der Basisplattform (20) verankert und freitragend ist, so dass ein Rest des Gerüsts (24) oberhalb der Basisplattform (20) angeordnet ist.

12. Verfahren zum Positionieren eines oder mehrerer Roboter (22) unter Verwendung eines Gerüsts (24), umfassend:
Bereitstellen einer Basisplattform (18);
Anordnen einer Arbeitsplattform (20) oberhalb der Basisplattform (18) zum Tragen eines oder mehrerer Menschen;
Tragen eines oder mehrerer Roboter (22) auf der Basisplattform (18) unabhängig von der Arbeitsplattform (20);
Anordnen mindestens eines Gerüsts (24) oberhalb der Basisplattform (18) und angrenzend zu der Arbeitsplattform (20) zum Tragen und Positionieren des einen oder der mehreren Roboter (22) entlang der Arbeitsplattform (20);
Platzieren jedes des einen oder der mehreren Roboter (22) auf einem an dem Gerüst (24) befestigten individuellen Traggestell (26), und
Ausbalancieren des individuellen Traggestells (26) und des darauf platzierten Roboters (22) mittels einer Basis (48), die sich unterhalb des Gerüsts (24) erstreckt.

13. Verfahren nach Anspruch 12, das ferner das unabhängige Anordnen einer Vielzahl von Robotern (22) auf dem Gerüst (24) an bestimmten Stellen unter Verwendung einer Vielzahl von Antriebsriemen (46a, 46b) umfasst.

14. Verfahren nach Anspruch 13, wobei die Antriebsriemen (46a, 46b) vertikal zueinander angeordnet sind.

15. Verfahren nach Anspruch 13 oder 14, wobei die Antriebsriemen (46a, 46b) jeden der Roboter (22) seitlich entlang einer Seite der Arbeitsplattform (20) bewegen.

## Revendications

1. Dispositif de positionnement d'un ou plusieurs robots (22) au moyen d'une passerelle, comprenant :
une plate-forme de base (18),
une plate-forme de travail (20) disposée au-dessus de la plate-forme de base (18) de façon à supporter une ou plusieurs personnes,
un ou plusieurs robots (22) portés par la plate-forme de base (18) indépendamment de la plate-forme de travail (20),
au moins une passerelle (24), disposée au-dessus de la plate-forme de base (18) et de manière contiguë à la plate-forme de travail (20), de façon à supporter et à positionner le ou les robots (22) le long de la plate-forme de travail (20) ;
le ou les robots (22) étant chacun placés sur un poste de support individuel (26) qui est fixé à la passerelle (24), et
le poste de support individuel (26) comportant une base (48) qui s'étend sous la passerelle (24) pour faire contrepoids au poste de support individuel (26) et au robot (22) placé dessus.

2. Dispositif selon la revendication 1, dans lequel la passerelle (24) se compose d'un ou plusieurs rails de guidage (50), et le poste de support individuel (26) comporte une monture (52) qui permet de monter la base (48) sur les rails de guidage (50) afin d'assurer la mobilité et le support du poste de support individuel (26) et du robot (22) placé dessus.

3. Dispositif selon la revendication 2, dans lequel le poste de support individuel (26) est en porte-à-faux à partir des rails de guidage (50), si bien que le poste de support individuel (26) et le robot (22) placé dessus sont portés par un côté intérieur de la passerelle (24).

4. Dispositif selon la revendication 2 ou 3, dans lequel la monture (52) comporte un ou plusieurs supports d'appui (54a, 54b) fixés aux extrémités d'une courroie de transmission (46a, 46b), et un mécanisme de tension de courroie (56) reliant les supports d'appui (54a, 54b) pour assurer le maintien de la juste tension sur la courroie de transmission (46a, 46b).

5. Dispositif selon l'une quelconque des revendications précédentes, dans lequel la passerelle (24) comprend une pluralité de courroies de transmission (46a, 46b) permettant le positionnement indépendant d'une pluralité desdits robots (22) sur la passerelle (24) en des emplacements spécifiques.

6. Dispositif selon la revendication 5, dans lequel les courroies de transmission (46a, 46b) sont disposées verticalement les unes par rapport aux autres.

7. Dispositif selon la revendication 5 ou 6, dans lequel les courroies de transmission (46a, 46b) déplacent chacun des robots (22) latéralement le long d'un côté de la plate-forme de travail (20).

8. Dispositif selon l'une quelconque des revendications 5 à 7, dans lequel chacune des courroies de transmission (46a, 46b) comporte un moteur (60a, 60b) et une ou plusieurs poulies (62a, 62b), et le moteur (60a, 60b) est disposé à une extrémité de la plate-forme de travail (20) de manière contiguë à un panneau de service (44) qui en facilite l'accès pour la maintenance.

9. Dispositif selon l'une quelconque des revendications précédentes, dans lequel la passerelle (24) est positionnée le long d'un bord de la plate-forme de travail (20) et au moins partiellement sous la plate-forme de travail (20).

10. Dispositif selon l'une quelconque des revendications précédentes, dans lequel l'au moins une passerelle (24) comprend une pluralité de passerelles (24) sur plusieurs côtés de la plate-forme de travail (20).

11. Dispositif selon l'une quelconque des revendications précédentes, dans lequel la passerelle (24) est ancrée en porte-à-faux à une extrémité de la plate-forme de base (18), si bien que le restant de ladite passerelle (24) est disposé au-dessus de la plate-forme de base (18).

12. Procédé de positionnement d'un ou plusieurs robots (22) au moyen d'une passerelle (24), comprenant les opérations consistant à :
disposer d'une plate-forme de base (18),
positionner une plate-forme de travail (20) au-dessus de la plate-forme de base (18) de façon à supporter une ou plusieurs personnes,
faire porter un ou plusieurs robots (22) par la plate-forme de base (18) indépendamment de la plate-forme de travail (20), et
positionner au moins une passerelle (24) au-dessus de la plate-forme de base (18) et de manière contiguë à la plate-forme de travail (20), de façon à supporter et à positionner le ou les robots (22) le long de la plate-forme de travail (20),
placer le ou les robots chacun sur un poste de support individuel (26) qui est fixé à la passerelle (24), et
faire contrepoids au poste de support individuel (26) et au robot (22) placé dessus au moyen d'une base (48) qui s'étend sous la passerelle (24).

13. Procédé selon la revendication 12, comprenant en outre le positionnement indépendant d'une pluralité desdits robots (22) sur la passerelle (24) en des emplacements spécifiques au moyen d'une pluralité de courroies de transmission (46a, 46b).

14. Procédé selon la revendication 13, dans lequel les courroies de transmission (46a, 46b) sont disposées verticalement les unes par rapport aux autres.

15. Procédé selon la revendication 13 ou 14, dans lequel les courroies de transmission (46a, 46b) déplacent chacun des robots (22) latéralement le long d'un côté de la plate-forme de travail (20).
